# EUROPEAN PATENT APPLICATION

(11) **EP 2 717 349 A1**
(43) Date of publication of application: **09.04.2014**
(21) Application number: 12793237.4
(22) Date of filing: 20.02.2012
(51) Int. Cl.: H01M 2/10

(54) **SECONDARY CELL DEVICE**

(30) Priority: 30.05.2011 JP 2011121044
(71) Applicant: Kabushiki Kaisha Toshiba, Minato-ku Tokyo 105-8001 (JP)
(72) Inventor: SHIMIZU, Hideo, Tokyo 105-8001 (JP); KOIKE, Noboru, Tokyo 105-8001 (JP); MURAI, Takashi, Tokyo 105-8001 (JP); MURO, Nagaaki, Tokyo 105-8001 (JP); SHUDO, Tadashi, Tokyo 105-8001 (JP); TADA, Nobumitsu, Tokyo 105-8001 (JP)
(74) Representative: Bokinge, Ole
(86) International application number: PCT/JP2012/053982
(87) International publication number: WO 2012/164982

(57) **Abstract**

According to an embodiment, a secondary battery device includes a plurality of secondary battery cells (14) and a resin case (12) including a plurality of wall portions defining a plurality of accommodation sections (20), which are configured to individually accommodate the secondary battery cells. At least one of the wall portions defining each of the accommodation sections includes a plurality of pressure springs (40a) molded integrally with the wall portion from a synthetic resin and configured to press and position each of the secondary battery cells accommodated in the accommodation sections.

## Description

### Technical Field

Embodiments described herein relate to a secondary battery device comprising a plurality of secondary battery cells.

### Background Art

In recent years, secondary batteries, for example, lithium-ion secondary batteries that are non-aqueous secondary batteries, have come to be seen as noticeable energy sources for electric vehicles, hybrid electric vehicles, and electric bicycles or energy sources for electrical equipment, by virtue of having high output power and high energy density.

In general, a secondary battery is constructed as a battery cell that comprises an outer container, an electrode group accommodated together with an electrolyte solution in the outer container, and electrode terminals on the outer container. For higher capacity and higher output power, a battery module is constructed such that a plurality of battery cells are disposed side by side in a case and these battery cells are connected in parallel or in series, and moreover, a battery pack is constructed by connecting a plurality of battery modules.

The battery pack is installed in a rear part of a vehicle interior or under the floor. Since the battery pack must fit in a confined space and since its weight will affect vehicle performance, it should of necessity be made smaller and lighter. Accordingly, the battery modules in the battery pack should also be as small and light as possible.

For the purpose of insulating the battery cells in the battery modules, a resin is used as the material of the case. The case is configured to cover the battery cells, and each battery cell is loaded into a frame on the case side. In view of assemblability during insertion of the battery cells, however, the size tolerance of the case must inevitably be increased, so that a slight gap exists between the battery cells and the case. If the gap exists between the battery cells and the case, the battery cells is caused to vibrate in the gap from the case by vibration during operation, whereupon relative displacement is caused between the cells. In this case, a load is imposed on bus-bars attached to terminals of the battery cells and junctions between the bus-bars and terminals, possibly breaking the bus-bars or junctions. Accordingly, a method is used in which the gap between the battery cells and the resin case is filled with an adhesive to secure the battery cells. Alternatively, a method is used in which the battery cells are pressed in the direction of lamination and secured by bolts, pressing members, or the like.

### Prior Art Document

### Patent Document

Patent Document 1: Jpn. Pat. Appln. KOKAI Publication No. 2008-66061

### Disclosure of Invention

### Problem to be solved by the Invention

Since a process for filling the adhesive is required additionally, however, it is difficult to reduce the time of assembling the battery modules. Preferably, the fixation should be performed without depending on the adhesive, in order to maintain long-term reliability of the secondary battery device. Also in the case where bolts, pressing members, etc., are used for the fixation, it is difficult to reduce the time of assembling the battery modules.

This invention has been made in view of these circumstances, and its object is to provide a secondary battery device capable of being improved in assemblability and reliability.

### Means for solving the Problem

A secondary battery device according to an aspect comprises a plurality of secondary battery cells; and a resin case comprising a plurality of wall portions defining a plurality of accommodation sections which are configured to accommodate the secondary battery cells, individually, at least one of the wall portions which define each of the accommodation sections comprising a plurality of pressure springs molded integrally with the partition wall from a resin and configured to press and position each of the secondary battery cells accommodated in the accommodation sections.

### Brief Description of Drawings

FIG. 1 is a perspective view showing a secondary battery device according to a first embodiment;
FIG. 2 is an exploded perspective view showing a case body, battery cell group, and top cover of the secondary battery device;
FIG. 3 is an exploded perspective view showing the interior of the case body and the top cover;
FIG. 4 is a perspective view showing the bottom wall side of the case;
FIG. 5 is a sectional view of the secondary battery device taken along line A-A of FIG. 1;
FIG. 6 is a sectional view of the secondary battery device taken along line B-B of FIG. 1;
FIG. 7 is a sectional view of the secondary battery device taken along line C-C of FIG. 1;
FIG. 8 is a sectional view schematically showing a state of engagement between the battery cells accommodated in the case and first pressure springs formed on partition walls;
FIG. 9 is a sectional view schematically showing a state of a second pressure spring formed on a sidewall of the case and a third pressure spring formed on a bottom wall before loading of the battery cells;
FIG. 10 is a sectional view schematically showing a state of engagement between the second pressure spring formed on the sidewall of the case, the third pressure spring formed on the bottom wall, and a battery cell;
FIG. 11 is a sectional view showing a case and battery cells of a secondary battery device according to a second embodiment;
FIG. 12 is a sectional view of the secondary battery device according to the second embodiment;
FIG. 13 is a cutaway perspective view showing the secondary battery device according to the second embodiment;
FIG. 14 is a plan view showing a pressure spring according to a modification; and

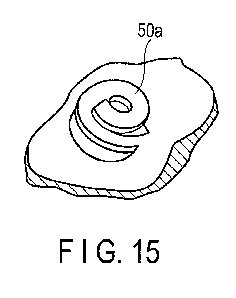

FIG. 15 is a plan view showing a pressure spring according to a modification.

### Embodiment for Carrying Out the Invention

Secondary battery devices according to embodiments will now be described in detail with reference to the drawings.

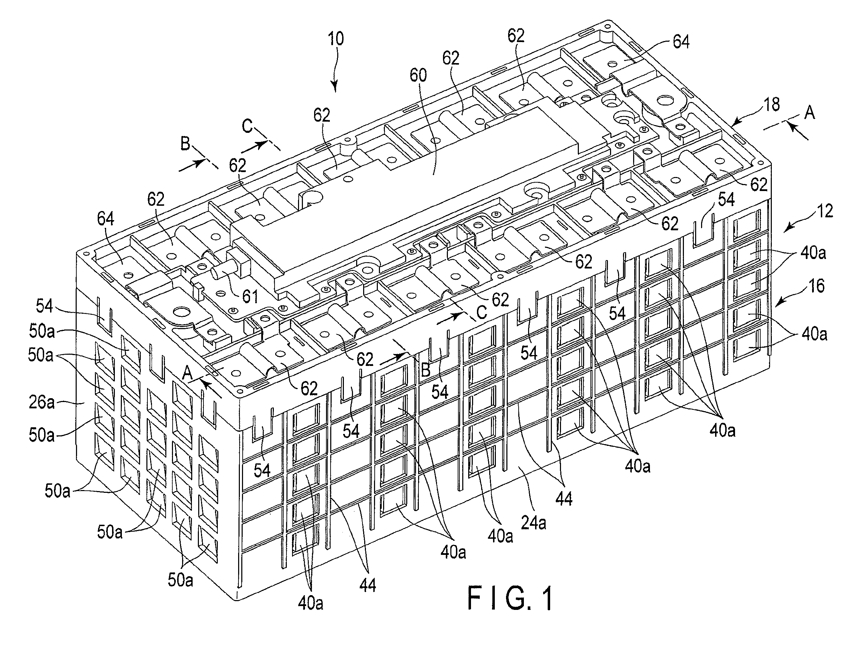

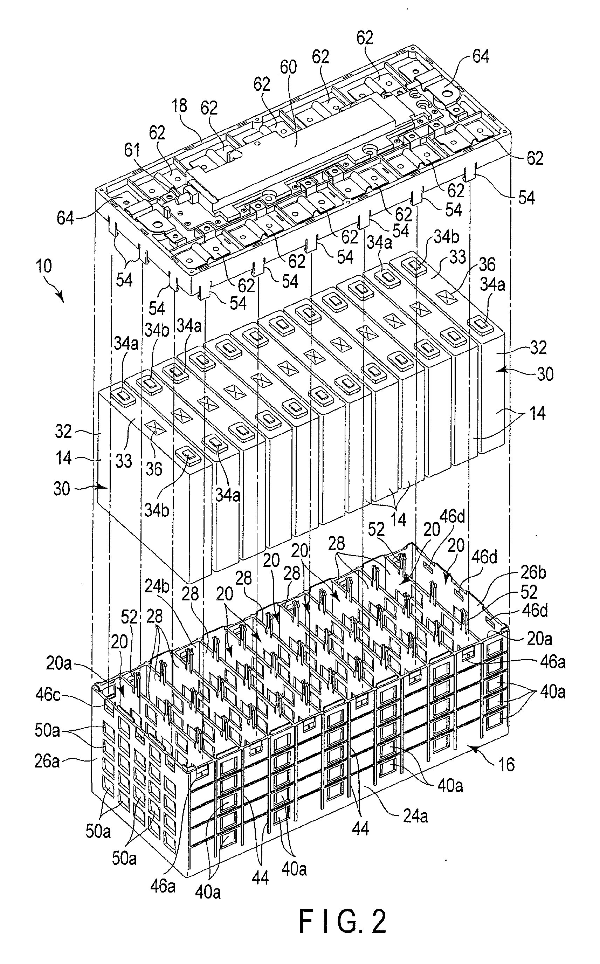

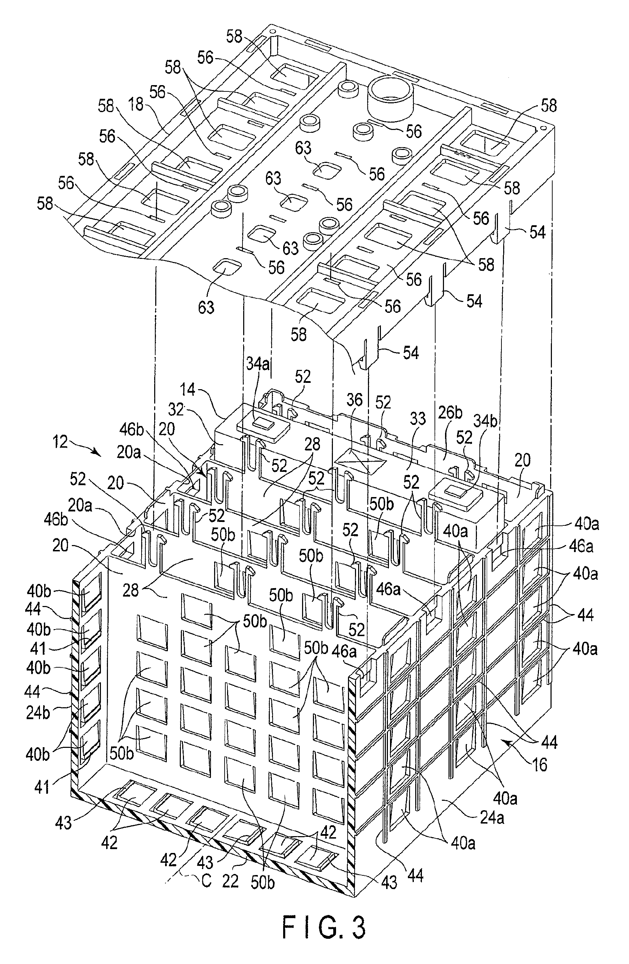

FIG. 1 is a perspective view showing an outline of a secondary battery device according to a first embodiment, FIG. 2 is an exploded perspective view showing a case body, battery cell group therein, and top cover of the secondary battery device, and FIG. 3 is an exploded perspective view showing the case body and top cover of the secondary battery.

As shown in FIGS. 1, 2 and 3, a secondary battery device 10 comprises a case 12 in the form of, for example, a rectangular box and a plurality (for example, twelve) of battery cells (secondary battery cells) 14 accommodated side by side in the case, and is constructed as a battery pack. The case 12 is formed of a case body 16 in the form of an open-topped, bottomed rectangular box, top cover 18 covering the top opening of the case body, and insulating synthetic resins, such as polycarbonate (PC), polyphenylene ether (PPE), etc. The case body 16 comprises twelve battery accommodation sections 20 each accommodating one battery cell 14.

As shown in FIGS. 2, 3 and 6, each battery cell 14 is a non-aqueous electrolyte secondary battery, such as a lithium-ion battery, and comprises a flat, substantially cuboid outer container 30 of aluminum or aluminum alloy and an electrode structure 31 accommodated together with a non-aqueous electrolyte solution in the outer container 30. The outer container 30 comprises an open-topped container body 32 and a lid 33 in the form of a rectangular plate, which is welded to the container body and closes the opening of the container body, and is liquid-tight inside. The electrode structure 31 is formed into a flat rectangular shape by, for example, spirally winding and radially compressing positive and negative plates with a separator sandwiched therebetween.

A positive electrode terminal 34a and negative electrode terminal 34b are provided individually on the longitudinally opposite end portions of the lid 33 and project from the lid. The positive electrode terminal 34a and negative electrode terminal 34b are connected to the positive and negative electrodes, respectively, of the electrode structure 31. One terminal, for example, the positive electrode terminal 34a, is electrically connected to the lid 33 and has the same potential as the outer container 30. The negative electrode terminal 34b extends through the lid 33. A seal member, for example, a gasket, of an insulator such as glass is provided between the negative electrode terminal 34b and lid 33b.

A safety valve 36, for example, rectangular, is formed in the central part of the lid 33. The safety valve 36 is a thin-walled portion formed by substantially halving the thickness of a part of the lid 33b, and a plurality of marks are formed in the central part of the upper surface of the thin-walled portion. If a gas is produced in the outer container 30 due to an abnormal mode of the battery cell 14 or the like so that the internal pressure of the outer container is increased to a predetermined value or more, the safety valve 36 opens so that its internal pressure is reduced to prevent failure such as rupture of the outer container 30.

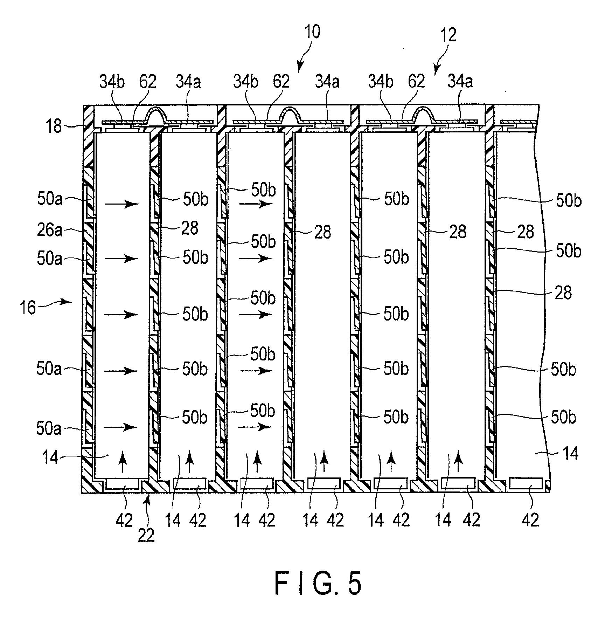

As shown in FIGS. 2 and 5, the plurality of battery cells 14 are lined up in such a manner that the respective principal surfaces of the outer containers 30 face one another with predetermined gaps therebetween and that the upper ends of the outer containers 30 with electrode terminals thereon are oriented in the same direction.

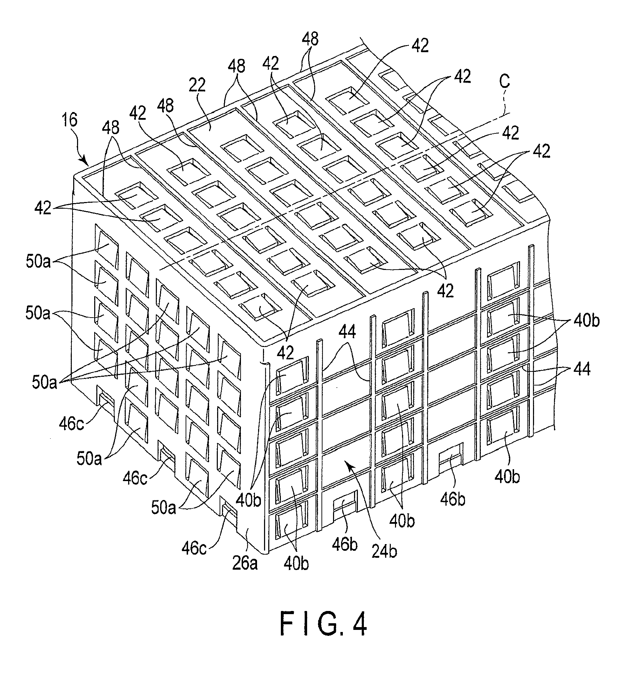

The following is a detailed description of the configuration of the case 12. As shown in FIGS. 1 to 4, the case body 16 is sized corresponding to the twelve battery cells 14 and comprises a rectangular bottom wall 22, two side edges or a pair of first sidewalls 24a and 24b of the bottom wall 22, other two side edges or a pair of second sidewalls 26a and 26b of the bottom wall 22, and a plurality (for example, eleven) of partition walls 28. The first sidewalls 24a and 24b are set up along the long sides and face the side surfaces of the battery cells 14. The second sidewalls 26a and 26b are set up along the short sides and individually face the principal surfaces of the principal surfaces of the battery cells 14. The partition walls 28 are provided between the first sidewalls 24a and 24b and individually face the principal surfaces of the battery cells 14. In the present embodiment, the case body 16 is integrally molded from a synthetic resin. The eleven partition walls 28 are formed in a rectangular shape, opposed substantially parallel to the second sidewalls 26a and 26b, and arranged longitudinally relative to the bottom wall 22 at predetermined intervals. Each partition wall 28 has its opposite side edges and lower edge coupled to the respective inner surfaces of the pair of first sidewalls 24a and 24b and the bottom wall 22, respectively.

The bottom wall 22, first sidewalls 24a and 24b, and second sidewalls 26a and 26b or partition walls 28 define a plurality of or, in this case, twelve accommodation sections 20. Each accommodation section 20 is formed having a cross-sectional shape slightly larger than that of the battery cell 14 and comprises a top opening through which the battery cell can be passed. The depth or height of each accommodation section 20 is set such that it can accommodate about 90% of the battery cell 14, exclusive of the electrode-side end portion of the battery cell 14. These accommodation sections 20 are arranged longitudinally relative to the bottom wall 22 and first sidewalls 24a and 24b and each two adjacent accommodation sections 20 are divided by the partition wall 28.

To ensure the strength of the case 12, the bottom wall 22, first sidewalls 24a and 24b, and second sidewalls 26a and 26b are formed thicker than each partition wall 28. The bottom wall 22, first sidewalls 24a and 24b, second sidewall 26a, and each partition wall 28 comprise a plurality of pressure springs molded integrally with each partition wall from a synthetic resin. These pressure springs press and position the battery cells 14 accommodated in the accommodation sections 20.

More specifically, as shown in FIGS. 1 to 3 and FIGS. 6 and 9, the pair of first sidewalls 24a and 24b each comprise a plurality of first pressure springs 40a that press each side surface of the battery cell 14. In one first sidewall 24a, a plurality (for example, five) of the first pressure springs 40a are lined up heightwise relative to the accommodation section 20 for each accommodation section 20. In the first sidewall 24a, moreover, each five of the plurality of first pressure springs 40a are arranged side by side in positions facing every second accommodation sections 20 along the array.

In other first sidewall 24b, a plurality (for example, five) of first pressure springs 40b are lined up heightwise relative to the accommodation section 20 for each accommodation section 20. In the first sidewall 24b, each five of the plurality of the first pressure springs 40a are arranged side by side in positions facing every second accommodation sections 20 along the array, and moreover, in positions facing the accommodation sections adjacent to the accommodation sections 20 opposite the first pressure springs 40a of the first sidewall 24a. Thus, the first pressure springs 40a of the first sidewall 24a and the first pressure springs 40b of the first sidewall 24b are arranged in zigzag along the array of the accommodation sections 20.

The first pressure springs 40a may be alternately provided on the two first sidewalls 24a and 24b along the array of the accommodation sections 20 corresponding to every plurality of other accommodation sections 20, for example, every third or fourth accommodation sections, instead of every second ones.

Each of the first pressure springs 40a and 40b is shaped like, for example, a rectangular plate and formed as a cantilever spring extending from the side of a top opening 20a of the accommodation section 20 toward the bottom wall 22. Further, each of the first pressure springs 40a and 40b extends inclined from the first sidewall 24a or 24b into the accommodation section 20 and integrally comprises, on its free end, a pressing protrusion 41 projecting toward the accommodation section 20. In the present embodiment, all the plurality of first pressure springs 40a and 40b have the same size and the same spring force.

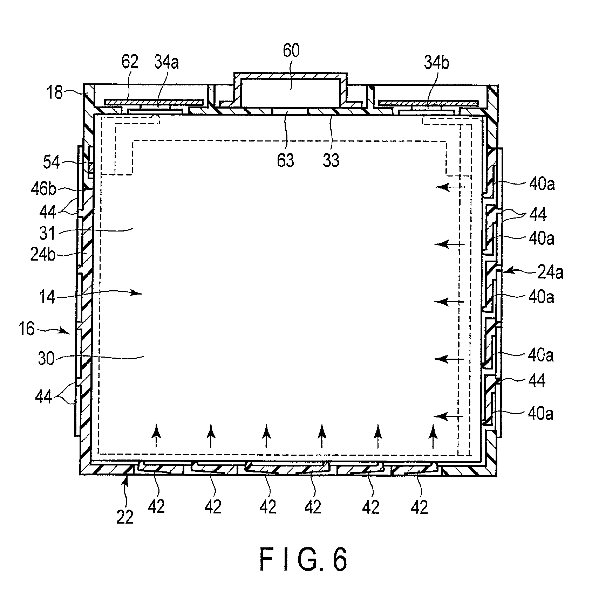

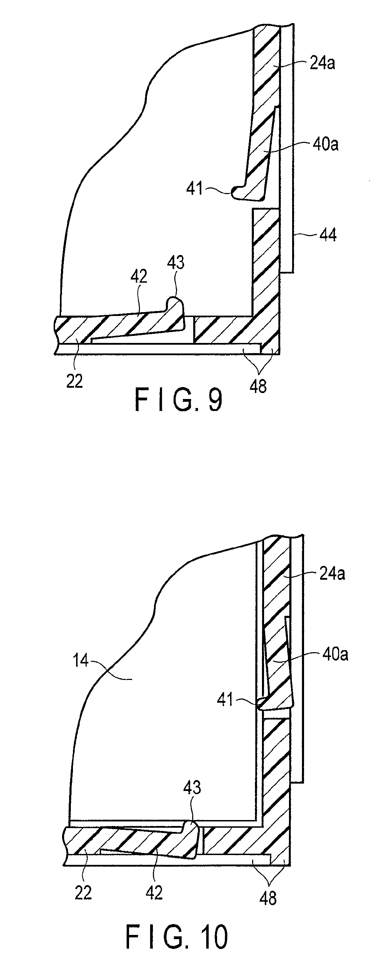

If the battery cell 14 is pushed into the accommodation section 20 through the top opening 20a from above, as shown in FIGS. 6 and 10, the five first pressure springs 40a are pressed by the side surface of the battery cell 14 and elastically deformed outward, whereupon pressing force is applied to the battery cell. Specifically, the five first pressure springs 40a press the side surface of the battery cell 14, press the battery cell 14 against the inner surface of the first sidewall 24b on the opposite side, and locate the transverse position of the battery cell 14 without play in the accommodation section 20. As this is done, the pressing protrusion 41 of each first pressure spring 40a abuts the side surface of the battery cell 14, thereby pressing the battery cell. Thus, the first pressure spring 40a is elastically deformed into a desired shape so that a desired pressing force can be applied to the battery cell 14.

Likewise, if the battery cell 14 is pushed into another accommodation section 20 through the top opening 20a from above, the five first pressure springs 40b are pressed by the side surface of the battery cell 14 and elastically deformed outward, whereupon pressing force is applied to the battery cell. Specifically, the five first pressure springs 40b press the side surface of the battery cell 14, press the battery cell 14 against the inner surface of the first sidewall 24a on the opposite side, and locate the transverse position of the battery cell 14 without play in the accommodation section 20. As this is done, the pressing protrusion 41 of each first pressure spring 40b abuts the side surface of the battery cell 14, thereby pressing the battery cell. Thus, the first pressure spring 40a is elastically deformed into a desired shape so that a desired pressing force can be applied to the battery cell 14.

If the pressing protrusions 41 constructed in this manner are provided, the deformation stroke of the first pressure springs 40a and 40b becomes longer. When the first pressure springs are elastically deformed by abutting the battery cell 14, therefore, their free ends may possibly project outward from the outer surfaces of the first sidewalls 24a and 24b, as shown in FIG. 10. Thus, according to the present embodiment, a plurality of ribs 44 are integrally formed on the outer surface of the first sidewall 24a such that they surround the first pressure spring 40a. Likewise, a plurality of ribs 44 are integrally formed on the outer surface of the first sidewall 24b such that they surround the first pressure spring 40b. These ribs 44 are formed slightly higher than the projections of the first pressure springs 40a and 40b. Even if the first pressure springs 40a and 40b project on the outer surface side of the first sidewalls 24a and 24b, external walls, objects, etc., can be prevented from contacting the ribs 44 or directly contacting the first pressure springs 40a and 40b. Thus, variation of the pressing force of the first pressure springs 40a and 40b can be prevented, and the battery cells 14 can be stably pressed and positioned.

If the first pressure springs are formed in those parts which face every second accommodation sections in each of the first sidewalls 24a and 24b, as described above, the number of formed pressure springs can be reduced to make each first sidewall stronger than in the case where the pressure springs are provided in regions facing all the accommodation sections 20. Also in this arrangement, the battery cell 14 accommodated in each accommodation section 20 can be pressed in one direction by the first pressure springs 40a or 40b, whereby positioning in this one direction can be achieved.

Further, a plurality of engagement holes 46a are formed in the upper end portion of the first sidewall 24a. These engagement holes 46a are alternately arranged side by side with the first pressure springs 40a in positions offset from the first pressure springs 40a or, in this case, longitudinally relative to the first sidewall 24a. Likewise, a plurality of engagement holes 46b are formed in the upper end portion of the first sidewall 24b. These engagement holes 46b are alternately arranged side by side with the first pressure springs 40b in positions offset from the first pressure springs 40b or, in this case, longitudinally relative to the first sidewall 24b. These engagement holes 46a and 46b are engaged individually with engaging claws of the top cover 18, which will be described later.

While the plurality of first pressure springs 40a and 40b face the side surfaces of the battery cell 14 and are distributed in regions facing the electrode structure of the battery cell 14 according to the present embodiment, the positions where the first pressure springs 40a and 40b are formed are optionally selectable. For example, the first pressure springs 40a and 40b may be provided in a plurality of positions where they contact high-strength parts of the battery cell 14. Further, all the plurality of first pressure springs 40a and 40b need not be restricted to the same size or the same spring force, and the size or spring force of one first pressure spring may be changed from the value of the other pressure springs in an arbitrary region. The number of installed first pressure springs is suitably adjustable.

As shown in FIGS. 3 to 6 and FIG. 9, the bottom wall 22 of the case body 16 comprises a plurality of second pressure springs 42, which individually press the respective bottom surfaces of the battery cells 14. A plurality (for example, six) of second pressure springs 42 are formed for each accommodation section 20 and are lined up transversely relative to the accommodation section 20.

Each second pressure spring 42 is in the form of, for example, a rectangular plate and is formed as a cantilever spring extending from the side of a central axis C of the bottom wall 22 toward the first sidewall 24a or 24b. Further, each second pressure spring 42 extends inclined from the bottom wall 22 into the accommodation section 20 and integrally comprises, on its free end, a pressing protrusion 43 projecting toward the accommodation section 20.

The six second pressure springs 42 provided corresponding to each accommodation section 20 are formed and arranged bilaterally symmetrically with respect to the central axis C of the bottom wall 22, that is, a center line that passes through the transverse center of the battery cell 14. Three of the six second pressure springs 42 are provided between the central axis C and first sidewall 24a and constitute cantilever springs individually extending from the side of the central axis C toward the first sidewall 24a. The three other second pressure springs 42 are provided between the central axis C and first sidewall 24b and constitute cantilever springs individually extending from the side of the central axis C toward the first sidewall 24b. In the present embodiment, all the plurality of second pressure springs 42 are formed having the same size and the same spring force.

If the battery cell 14 is pushed into the accommodation section 20 through the top opening 20a from above and reaches the vicinity of the bottom wall 22, as shown in FIGS. 5, 6 and 10, the six second pressure springs 42 are pushed by the bottom surface of the battery cell 14 and elastically deformed outward, whereupon pressing force is applied to the battery cell. Specifically, the six second pressure springs 42 press the bottom surface of the battery cell 14 upward or, in this case, toward the top opening 20a of the accommodation section 20, press the battery cell 14 against the inner surface of the top cover 18, which will be described later, and locate the height position of the battery cell 14 without play in the accommodation section 20. As this is done, the pressing protrusion 43 of each second pressure spring 42 abuts the bottom surface of the battery cell 14, thereby pressing the battery cell. Thus, the second pressure spring 42 is elastically deformed into a desired shape so that a desired pressing force can be applied to the battery cell 14. Since the six second pressure springs 52 are provided symmetrically on either side of the transverse center of the bottom surface of the battery cell 14, moreover, they can press the bottom surface of the battery cell 14 bilaterally equally and press the battery cell against the inner surface of the top cover 18 without inclination.

If the pressing protrusions 43 constructed in this manner are provided, the deformation stroke of the second pressure spring 42 becomes longer. When the second pressure spring is elastically deformed by abutting the battery cell 14, therefore, its free end may possibly project outward from the outer surface of the bottom wall 22, as shown in FIG. 10. Thus, according to the present embodiment, a plurality of ribs 48 are integrally formed on the outer surface of the bottom wall 22 such that they surround the second pressure spring 42. The ribs 48 are formed slightly higher than the projection of the second pressure spring 42. In the present embodiment, each rib 48 is formed along the peripheral edge of the bottom wall 22, and moreover, formed between each two adjacent second pressure springs 42. When the bottom wall 22 of the case 12 is placed on an installation surface, therefore, the installation surface contacts the ribs 46 and is prevented from directly contacting the second pressure spring 42 even if the second pressure spring 42 projects on the outer surface side of the bottom wall 22. Thus, variation of the pressing force of the second pressure spring 42 can be prevented, and the battery cells 14 can be stably pressed and positioned.

While the plurality of second pressure springs 42 are opposed to the bottom surface of the battery cell 14 and lined up in a row according to the present embodiment, the positions where the second pressure springs 42 are formed are optionally selectable. Further, all the plurality of second pressure springs 42 need not be restricted to the same size or the same spring force, and the size or spring force of one first pressure spring may be changed from the value of the other pressure springs in an arbitrary region. The number of installed second pressure springs is suitably adjustable.

As shown in FIGS. 1 to 5 and FIGS. 7 and 8, the one second sidewall 26a and each partition wall 28 of the case body 16 comprise a plurality of third pressure springs 50a and 50b that individually press the principal surfaces of the battery cells 14. The second sidewall 26a is integrally formed with a plurality (for example, 22) of third pressure springs 50a. These third pressure springs 50a are distributed over the entire surface of the second sidewall 26a except the peripheral edge portion of the second sidewall. For example, 20 third pressure springs 50a are arranged transversely and heightwise relative to the second sidewall 26a in a matrix, while the remaining two third pressure springs 50a are located spaced apart from each other at the upper end portion of the second sidewall.

Each of the third pressure springs 50a is shaped like, for example, a rectangular plate and formed as a cantilever spring extending from the side of the top opening 20a of the accommodation section 20 toward the bottom wall 22. Each third pressure spring 50a extends inclined from the second sidewall 26a into the accommodation section 20, and its free end projects toward the accommodation section 20. Each third pressure spring 50a is formed thinner than the second sidewall 26a, and its proximal end portion is located flush with the inner surface of the second sidewall 26a and slightly spaced apart from the outer surface of the second sidewall 26a. In the present embodiment, all the plurality of third pressure springs 50 have the same size and the same spring force.

A plurality of engagement holes 46c are formed in the upper end portion of the second sidewall 26a. These engagement holes 46c are alternately arranged side by side with the third pressure springs 50 in positions offset from the third pressure springs 50 or, in this case, longitudinally relative to the second sidewall 26a. Likewise, a plurality of engagement holes 46d are formed in the upper end portion of the second sidewall 26b. These engagement holes 46c and 46d are engaged with the engaging claws of the top cover 18, which will be described later.

As shown in FIGS. 3, 5, 7 and 8, each partition wall 28 is integrally formed with a plurality (for example, 22) of third pressure springs 50b. These third pressure springs 50b are configured and disposed in the same manner the third pressure springs 50a of the second sidewall 26a. Specifically, they are distributed over the entire surface of the partition wall 28 except the peripheral edge portion of the partition wall. For example, 20 third pressure springs 50b are arranged transversely and heightwise relative to the partition wall 28 in a matrix, while the remaining two third pressure springs 50b are located spaced apart from each other at the upper end portion of the partition wall.

Each of the third pressure springs 50b is shaped like, for example, a rectangular plate and formed as a cantilever spring extending from the side of the top opening 20a of the accommodation section 20 toward the bottom wall 22. Each third pressure spring 50b extends inclined from the partition wall 28 into the accommodation section 20, and its free end projects toward the accommodation section 20. Each third pressure spring 50b is formed thinner than the partition wall 28, and its proximal end portion is located flush with one surface (surface opposite to the second sidewall 26a) of the partition wall 28 and slightly spaced apart from the other surface. In the present embodiment, all the plurality of third pressure springs 50b have the same size and the same spring force.

Each partition wall 28 integrally comprises a plurality (for example, three) of bifurcated engaging claws 52. These engaging claws 52 extend upwardly from the upper end edge of the partition wall 28. The three engaging claws 52 are provided at intervals along the width of the partition wall 28, and one of them is provided in the transverse central part of the partition wall.

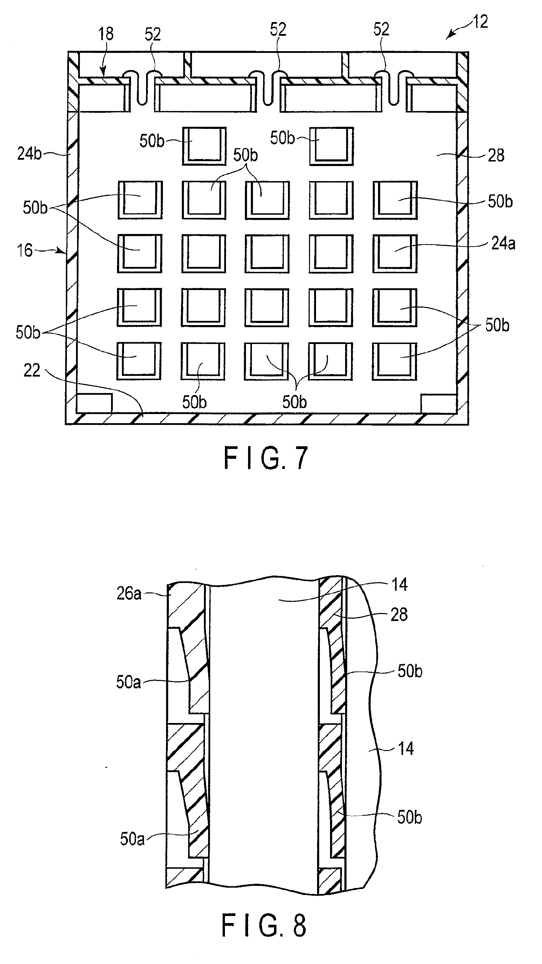

If the battery cell 14 is pushed into the accommodation section 20, for example, the accommodation section 20 defined between the second sidewall 26a and partition wall 28, through the top opening 20a from above, as shown in FIGS. 5 and 8, the 22 third pressure springs 50a of the second sidewall 26a are pushed by the principal surface of the battery cell 14 and elastically deformed outward, whereupon pressing force is applied to the battery cell. Specifically, the third pressure springs 50a press the principal surface of the battery cell 14 thicknesswise relative to the battery cell, press the battery cell 14 against the partition wall 28, and locate the thicknesswise position of the battery cell 14 without play in the accommodation section 20.

Likewise, if the battery cell 14 is pushed into the accommodation section 20 defined between two adjacent partition walls 28 through the top opening 20a from above, the third pressure springs 50b of the partition wall 28 located on the side of the second sidewall 26a are pushed by the principal surface of the battery cell 14 and elastically deformed toward the second sidewall 26a, whereupon pressing force is applied to the battery cell. Specifically, the 22 third pressure springs 50b press the principal surface of the battery cell 14 thicknesswise relative to the battery cell, press the battery cell 14 against the partition wall 28 on the opposite side, and locate the thicknesswise position of the battery cell 14 without play in the accommodation section 20. If the battery cell 14 is pushed into the accommodation section 20 defined between the other second sidewall 26b and partition wall 28 through the top opening 20a from above, moreover, the third pressure springs 50b of the partition wall 28 are pushed by the principal surface of the battery cell 14 and elastically deformed toward the second sidewall 26a, whereupon pressing force is applied to the battery cell. Specifically, the 22 third pressure springs 50b press the principal surface of the battery cell 14 thicknesswise relative to the battery cell, press the battery cell 14 against the inner surface of the second sidewall 26b, and locate the thicknesswise position of the battery cell 14 without play in the accommodation section 20.

While the plurality of third pressure springs 50a and 50b face the principal surface of the battery cell 14 and are distributed in regions facing the electrode structure in the battery cell according to the present embodiment, the positions where the third pressure springs 50a and 50b are formed are optionally selectable. For example, the third pressure springs 50a and 50b may be provided in a plurality of positions where they contact high-strength parts of the battery cell 14. Further, all the plurality of third pressure springs 50a and 50b need not be restricted to the same size or the same spring force, and the size or spring force of one third pressure spring may be changed from the value of the other pressure springs in an arbitrary region. The number of installed third pressure springs is suitably adjustable.

As shown in FIGS. 1 to 7, the top cover 18 is put on the case body 16, in which the battery cells 14 are accommodated in the accommodation sections 20, from above and attached to the case body 16. Thus, the case 12 is constructed in the form of a rectangular box as a whole. The top cover 18 is in the form of a rectangular plate of a size corresponding to the bottom wall 22. A plurality of engaging claws 54 are integrally formed on the peripheral edge portion of the top cover 18. The plurality of engaging claws 54 are arranged at predetermined intervals throughout the periphery of the top cover. Each engaging claw 54 projects downward from the peripheral edge of the top cover 18 and is formed for elastic deformation. As shown in FIG. 3, moreover, the top cover 18 is formed with a plurality of slits 56 arranged side by side in three rows extending in its longitudinal direction.

As described later, the top cover 18 is formed with a plurality of apertures 58 through which the electrode terminals of the battery cells 14 are passed individually. These apertures 58 are arranged side by side in two rows extending in the longitudinal direction of the top cover 18. An exhaust duct 60 is attached to the central part of the upper surface of the top cover 18 and extends longitudinally relative to the top cover 18 and substantially throughout the length of the top cover 18. An exhaust valve 61 is provided on one end of the exhaust duct 60. Further, the top cover 18 is formed with a plurality of exhaust holes 63 that individually face the respective safety valves 36 of the battery cells 14, and these exhaust holes communicate with the exhaust duct 60.

As shown in FIGS. 1 to 7, the top cover 18 constructed in this manner is put on the case body 16 from above with the battery cells 14 accommodated in the accommodation sections 20 of the case body 16. The plurality of engaging claws 54 are elastically engaged with the engagement holes 46a, 46b, 46c and 46d of the case body 16, individually. Further, the plurality of engaging claws 52 protruding from each partition wall 28 are engaged with their corresponding slits 56 of the top cover 18, whereupon the top cover is attached to the upper part of the case body 16.

The battery cell 14 accommodated in each accommodation section 20 is pressed against the inner surface of the top cover 18 and positioned heightwise by the second pressure springs 42 formed on the bottom wall 22. Thus, the top cover 18 serves as a reference for positioning the battery cells 14. Specifically, in the present embodiment, the plurality of battery cells 14 contact the inner surface of the top cover 18 so that their upper end positions, especially the height positions of the electrode terminals 34a and 34b, are located. In this way, the plurality of battery cells 14 are arranged in alignment without dispersion. The positive electrode terminal 34a and negative electrode terminal 34b of each battery cell 14 are individually passed through their corresponding apertures 24 and exposed upward. The safety valve 36 of each battery cell 14 faces its corresponding exhaust hole 26 of the top cover 18.

As shown in FIGS. 1, 2, 5 and 6, the plurality of battery cells 14 are electrically connected, for example, in series, by a plurality of bus-bars 62 for use as electrically conductive members. The plurality of battery cells 14 are arranged so that the positive and negative electrode terminals of the adjacent battery cells 14 are alternately oriented. Each bus-bar 62 is formed of a metal plate of an electrically conductive material such as aluminum. The bus-bar 62 has one end portion joined to the positive electrode terminal 34a of the battery cell 14 and the other end portion welded to the negative electrode terminal 34b of the adjacent battery cell 14, and electrically connects these electrode terminals. Thus, the twelve battery cells 14 are connected in series by the plurality of bus-bars 62. The plurality of battery cells 14 may be connected in parallel instead of in series.

Output terminals 64 are connected individually to the negative electrode terminal 34b of that battery cell 14 of the plurality of battery cells 14 which is located at one end of the array and the positive electrode terminal 34a of the battery cell 14 located at the other end of the array. A battery monitoring board (not shown) comprising a voltage control unit, voltage detector, temperature sensor, etc., is set on the top cover 18 and electrically connected to the bus-bars 62 and output terminals 64. Further, the top cover 18 is mounted with a lid (not shown) that covers the bus-bars 62, exhaust duct 60, and battery monitoring board.

According to the secondary battery device constructed in this manner, a battery module comprising the case 12 accommodating the battery cells 14 can be assembled by only loading the battery cells 14 individually into the accommodation sections 20 of the case body 16 and mounting the top cover 18 from above. In doing this, the battery cells 14 can be supported and held without play in predetermined positions in the accommodation sections 20 by pressing the battery cells 14 accommodated in the accommodation sections 20 in three directions and pressing them against their opposite wall portions of the case by means of the plurality of pressure springs integrally formed on the wall portions. In this way, the plurality of battery cells can be held without play without using an adhesive or bolts. Thus, in assembling the secondary battery device, the assembly time can be reduced by omitting an adhesive application process or bolt-fixing process. At the same time, the battery cells can be supported without play for a long period of time without depending on the adhesive, so that the reliability can be improved. In this way, a secondary battery device that is small and has improved assemblability and reliability can be obtained.

In the embodiment described above, the pressure springs are individually formed on the wall portions surrounding the battery cells in three directions so that the battery cells are pressed in the three directions. Alternatively, however, the pressure springs may be formed on at least a wall portion in one direction so that the battery cells are pressed in the one direction. Also in this case, the battery cells can be positioned and held without play in the accommodation sections, so that the assemblability and reliability can be improved.

According to the present embodiment, moreover, the wall portions of the case body are integrally formed with a plurality of pressure springs for each accommodation section. If pressure springs with high spring force are molded integrally with the wall portions from a synthetic resin, the pressure springs may possibly become fragile and easy to break. However, if a plurality of pressure springs are provided such that one of the pressure springs has low spring force, as in the present embodiment, the springs can be made flexible and hard to break. By equalizing the spring forces of the plurality of pressure springs, at the same time, the battery cells can be pressed by sufficient pressing force and held without play. Further, the plurality of pressure springs can be formed in arbitrary positions with arbitrary spring forces, so that the design flexibility can be increased.

According to the present embodiment, as described above, a secondary battery device with improved assemblability and reliability can be obtained.

The following is a description of a secondary battery device according to a second embodiment.

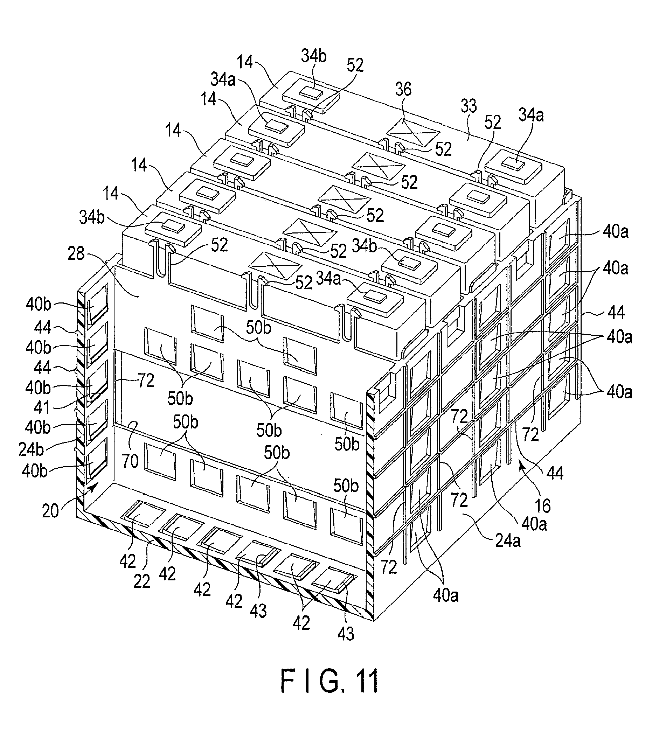

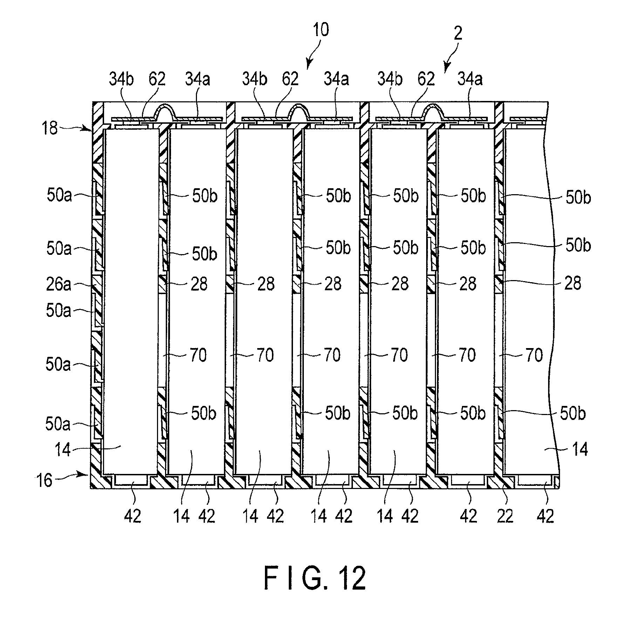

FIGS. 11, 12 and 13 individually show the secondary battery device according to the second embodiment. In the second embodiment, like reference numbers are used to designate the same parts as those of the foregoing first embodiment, and a detailed description thereof is omitted.

According to the second embodiment, as shown in FIGS. 11 to 13, each partition wall 28 provided between adjacent battery cells 14 in a case body 16 comprises a flow passage 70 in its central part through which air can flow, the flow passage 70 extending between a pair of first sidewall 24a and 24b. Further, the first sidewalls 24a and 24b are penetrated by slit-like vents 72 that connect the flow passages 70, individually. Each battery cell 14 can be cooled by circulating cooling air through these vents 72 and flow passages 70.

In the second embodiment, other configurations of the secondary battery device are the same as those of the foregoing first embodiment. According to the second embodiment, like the foregoing first embodiment, a secondary battery device with improved assemblability and reliability can be obtained, and the coolability of the battery cells can be improved.

This invention is not limited to the embodiments described above, and at the stage of carrying out the invention, its constituent elements may be embodied in modified forms without departing from the spirit of the invention. Further, various inventions can be formed by appropriately combining the plurality of constituent elements disclosed in the above-described embodiments. Some constituent elements may be deleted from all the constituent elements shown in the embodiments, or constituent elements of different embodiments may be combined as required.

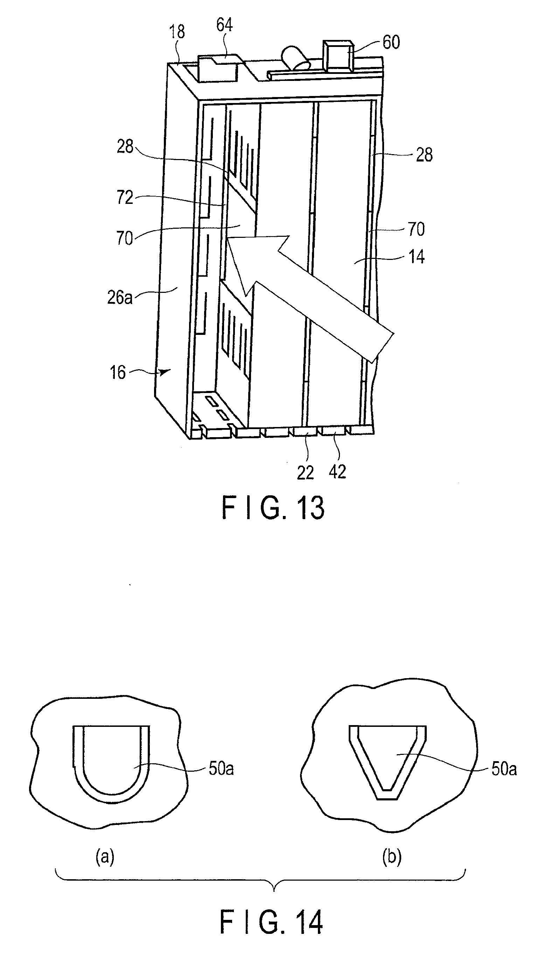

For example, the pressure springs formed on the wall portions of the case are not limited to the rectangular shape, and may alternatively be substantially U-shaped pressure springs, as shown in FIG. 14(a), substantially triangular pressure springs, as shown in FIG. 14(b), or spiral pressure springs, as shown in FIG. 14(c), or of another arbitrary shape. Further, the pressure springs are not limited to cantilever springs, and may be of any moldable shape, for example, dimple-like or wave-shaped. Furthermore, the number and arrangement of the pressure springs provided on each wall portion are not limited to the foregoing embodiments and are variously changeable.

Although the plurality of battery cells are configured to be lined up in a row, they may alternatively be arranged side by side in a plurality of rows. The number of battery cells may be increased or reduced depending on the design power of the secondary battery device. Although the case body is integrally molded from a synthetic resin in the foregoing embodiments, moreover, the case body may be formed in such a manner that the bottom wall, sidewalls, and partition walls are separately molded and then welded together.

## Claims

1. A secondary battery device comprising:
a plurality of secondary battery cells; and
a resin case comprising a plurality of wall portions defining a plurality of accommodation sections which are configured to accommodate the secondary battery cells, individually,
at least one of the wall portions which define each of the accommodation sections comprising a plurality of pressure springs molded integrally with the partition wall from a resin and configured to press and position each of the secondary battery cells accommodated in the accommodation sections.

2. The secondary battery device of claim 1,
wherein the wall portions of the case comprises a plurality of walls which individually face a bottom, opposite side surfaces, and two principal surfaces of the secondary battery cell, and the walls which face the bottom, one of the side surfaces, and one of the principal surfaces integrally comprise a plurality of pressure springs configured to press and position each of the secondary battery cells in the accommodation sections in three directions.

3. The secondary battery device of claim 2,
wherein the plurality of pressure springs of each of the walls are distributed so as to press a plurality of arbitrary positions of the secondary battery cell.

4. The secondary battery device of any one of claims 1 to 3, wherein the wall portion of the case comprises a bottom wall facing bottoms of the secondary battery cells, a pair of first sidewalls set up along two opposite side edges of the bottom wall and facing side surfaces of the secondary battery cells, a pair of second sidewalls set up along the other two opposite side edges of the bottom wall and facing principal surfaces of the secondary battery cells, and a plurality of partition walls facing the second sidewalls in substantially parallel relation between the first sidewalls, arranged side by side with gaps therebetween, and facing the principal surfaces of the secondary battery cells, and the accommodation section is defined by the bottom wall, first sidewalls, and second sidewalls or partition walls and comprises a top opening through which the secondary battery cell is passable.

5. The secondary battery device of claim 4,
wherein one second sidewall and each of the partition walls each integrally comprise a plurality of pressure springs, the first sidewalls integrally comprise a plurality of pressure springs which individually press the side surfaces of the secondary battery cells, and the pressure springs constitute cantilever springs extending from the side of the top opening toward the bottom wall.

6. The secondary battery device of claim 5,
wherein the case comprises a plurality of accommodation sections arranged side by side along the first sidewalls, the partition walls are arranged between the adjacent accommodation sections, and the pressure springs of one of the first sidewalls are provided in positions individually facing every plurality of other accommodation sections, out of the plurality of accommodation sections, the plurality of pressure springs of the other first sidewall being provided in positions individually facing the other accommodation sections located between the every other plurality of accommodation sections.

7. The secondary battery device of claim 5,
wherein the case comprises a plurality of accommodation sections arranged side by side along the first sidewalls, the partition walls are arranged between the adjacent accommodation sections, and the pressure springs of one of the first sidewalls are provided in positions individually facing every second accommodation sections, out of the plurality of accommodation sections, the plurality of pressure springs of the other first sidewall being provided in positions individually facing the other accommodation sections located between the every second accommodation sections.

8. The secondary battery device of claim 4,
wherein the bottom wall integrally comprises a plurality of pressure springs each facing one of the accommodation sections, the plurality of pressure springs being disposed symmetrically on either side of a center line of the secondary battery cell.

9. The secondary battery device of claim 4,
wherein the bottom wall integrally comprises a plurality of ribs protruding from the outer surface of the bottom wall and located around the pressure springs.

10. The secondary battery device of any one of claims 1 to 3, wherein the case comprises a top cover attached to the wall portions and covering opposite electrodes of the secondary battery cell and the accommodation sections, and a plurality of electrically conductive members are provided on the top cover and configured to electrically connect the electrodes of the adjacent secondary battery cells.

11. The secondary battery device of claim 4,
wherein the partition wall comprises an air passage extending between the pair of first sidewalls, and the pair of first sidewalls each comprises a slit communicating with the air passage.
